## Europäisches Patentamt
## European Patent Office
## Office européen des brevets

(19)

(11) Publication number: **0 157 845**
**B1**

(12)

# EUROPEAN PATENT SPECIFICATION

(45) Date of publication of patent specification: **25.05.88**

(51) Int. Cl.⁴: **G 01 B 7/00, G 01 M 1/10**

(21) Application number: **84903649.6**

(22) Date of filing: **01.10.84**

(86) International application number:
**PCT/GB84/00334**

(87) International publication number:
**WO 85/01573 11.04.85 Gazette 85/09**

(54) **APPARATUS AND METHOD FOR LOCATING AN OBJECT.**

(30) Priority: **01.10.83 GB 8326353**

(43) Date of publication of application:
**16.10.85 Bulletin 85/42**

(45) Publication of the grant of the patent:
**25.05.88 Bulletin 88/21**

(84) Designated Contracting States:
**AT BE CH DE FR GB LI LU NL SE**

(56) References cited:
**DE-A-2 717 454**
**DE-A-2 945 819**
**GB-A-2 061 532**
**US-A-3 040 563**

(73) Proprietor: **THE UNIVERSITY OF BIRMINGHAM**
**Chancellor's Court P.O. Box 363**
**Birmingham B15 2TT (GB)**

(72) Inventor: **PHAM, Duc, Truong**
**84 Sellwick Drive Selly Park**
**Birmingham B29 7JH (GB)**
Inventor: **DISSANAYAKE, Madappuligedera,**
**W.M.G.**
**Flat 3 29 Augusta Road Moseley**
**Birmingham B13 (GB)**

(74) Representative: **Evershed, Michael et al**
**MARKS & CLERK Alpha Tower Suffolk Street**
**Queensway**
**Birmingham B1 ITT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**0 157 845**

**Description**

Technical field

This invention relates to an apparatus for locating an object and also to a method for locating an object.

Background art

In automated manufacturing equipment, it is sometimes required to locate an object before transferring the object to the next manufacturing stage. In one known method, the position and orientation of an object are detected using a television camera. This method is complex and is adversely affected by artificial factory lighting. In another known method, the position and orientation of an object are detected using an array of tactile sensors but a very high density of sensors is required for accurate detection.

Disclosure of invention

It is an object of this invention to provide a new apparatus and a new method for locating an object.

According to one aspect of this invention, there is provided an apparatus for locating an object positioned on a platform, said apparatus including the platform, said platform being mounted for vibration about at least one axis and arranged to receive the object, means for measuring at least one parameter related to the vibration of the platform whilst the platform is vibrating, first calculating means responsive to the measuring means for calculating at least one quantity related to the inertia of the object positioned on the platform, and a second calculating means for calculating the orientation of the object on the platform from said at least one inertia quantity.

The present invention thus provides a simple apparatus for locating an object which does not suffer from the disadvantages discussed above in relation to the two known methods.

In a preferred arrangement of the invention, the apparatus includes a rotary motor arranged to rotate the platform relative to the motor about a rotary axis of the motor, the combined assembly of the motor and the platform being mounted for vibration about a single vibratory axis which is perpendicular to the rotary axis of the motor.

Conveniently, in this arrangement, the measuring means is arranged to calculate the frequency of vibration of the combined assembly at a set of rotational positions of the platform, the first calculating means is arranged to calculate an inertia quantity at each of said positions, and the second calculating means is arranged to calculate the position and orientation of the object from said inertia quantities.

Conveniently, the rotary axis of the motor and the vibratory axis are arranged so that they do not intersect each other.

In an alternative arrangement of the invention, the apparatus includes a frame mounted on a base for vibration about a first vibratory axis and the platform is mounted on the frame for vibration about a second vibratory axis, the first and second vibratory axes being perpendicular to each other.

Conveniently, in the alternative arrangement, the measuring means is arranged to measure angular displacement and velocity of the frame about the first vibratory axis and angular displacement and velocity of the platform about the second vibratory axis, the first calculating means is arranged to calculate the position of an object on the platform from the static angular displacements and the inertia matrix of the object with respect to a fixed set of axes from a set of displacement and velocity measurements made during vibration of the platform, and the second calculating means is arranged to calculate the orientation of the object from the inertia matrix.

In another arrangement, the platform is mounted to vibrate in turn about each one of a set of axes.

According to another aspect of this invention there is provided a method of locating an object positioned on a platform comprising the steps of: permitting the platform to vibrate about at least one vibratory axis, measuring at least one parameter related to the vibration of the platform, calculating at least one quantity related to the inertia of the object on the platform from the measurement of said at least one parameter, and calculating at least the orientation of the object from said at least one inertia quantity.

Brief description of drawings

Figure 1 is a plan view of the mechanical components of an apparatus embodying this invention;

Figure 2 is a sectional view on line 2—2 of Figure 1;

Figure 3 is a circuit diagram of the electronic components of the apparatus shown in Figures 1 and 2;

Figures 4 and 5 are diagrams for explaining the operation of the apparatus shown in Figures 1 to 3;

Figures 6a to 6e are flow charts of the computer program which forms part of the apparatus shown in Figures 1 to 3;

Figure 7 is a plan view of the mechanical parts of another apparatus embodying this invention;

Figure 8 is a diagram for explaining the operation of the apparatus shown in Figure 7;

Figure 9 is an elevation view of the mechanical part of another apparatus embodying the invention; and

Figure 10 is a diagram for explaining the operation of the apparatus shown in Figure 9.

2

Modes for carrying out the invention

Various embodiments of the invention will now be described, by way of example, with reference to the drawings.

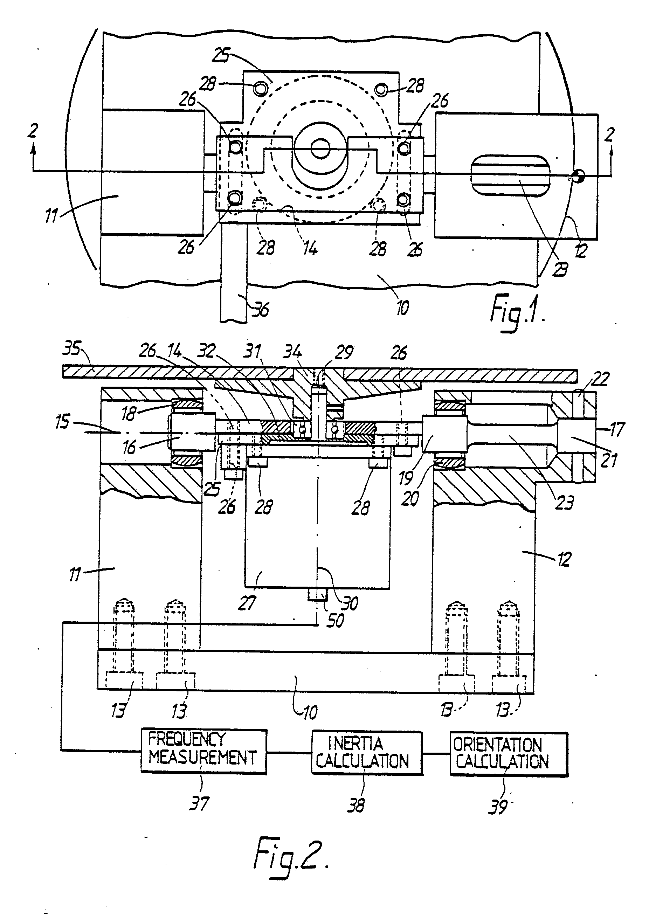

Referring now to Figures 1 and 2, the mechanical parts of the apparatus comprise a horizontal base plate 10 on which is mounted a left-hand pillar 11 and a right-hand pillar 12. Each of the pillars is secured to the base plate 10 by a set of four screws 13. A horizontal plate 14 is mounted for rotation about an axis 15 by means of a shaft 16 secured to its left-hand side and a torsion bar 17 secured to its right-hand side. The plate 14, shaft 16 and bar 17 are formed integrally. The shaft 16 is mounted in a bearing 18 positioned in the pillar 11. The torsion bar 17 comprises a cylindrical portion 19 mounted in a bearing 20 positioned in the right-hand pillar 12, a right-hand cylindrical portion 21 clamped to the pillar 12 by an interference member 22 and a central portion 23 which provides the desired torsion. The plate 14 is secured to a plate 25 by a set of four screws 26, the screws 26 being located in circular apertures in plate 14 and in slots in plate 25. A stepper motor 27 is secured to plate 25 by a set of four screws 28. In the present example, the motor 27 is a type 23PMC004 motor supplied by Astrosyn (U.K.) Ltd. of 110 High Street, Strood, Rochester, Kent.

The motor 27 has a drive shaft 29 which rotates about an axis 30, the axes 15 and 30 being perpendicular to each other and also displaced from each other. The drive shaft 29 is mounted in a bearing 31 which in turn is mounted in a ring 32 which is located in an aperture in plate 25. The drive shaft 29 carries a hub 34 on which is mounted a circular platform 35. For reasons of clarity, the hub 34 and platform 35 are not shown in Figure 1. A horizontally extending rod 36 is secured to the plate 25 and, as will be explained in more detail below, rod 36 is associated with a solenoid which is used to induce vibrations in the combined assembly of motor 27 and platform 35.

The apparatus is intended to form part of automated manufacturing equipment. In operation, an object is discharged onto the platform 35 and the platform is then rotated by the motor 27 to each of a number of rotational positions. In each rotational position, the solenoid is energised so as to induce natural vibrations in the combined assembly of the object, the platform 35 and the motor 27. The vibrations may be sensed by any suitable means such as an accelerometer or a displacement transducer and in the present example they are sensed by an accelerometer 50 mounted on the base of motor 27. The output of the accelerometer 50 is supplied to a frequency measurement device 37 and a frequency measurement is made in each rotational position. The output of device 37 is supplied to an inertia calculation device 38 which calculates the inertia of the combined assembly of the object, the platform 35 and the motor 27 from the frequency measurements. The output of the device 38 is supplied to an orientation calculation device 39 which calculates both the orientation and position of the object from the inertia data. The devices 37, 38 and 39 form part of the electronic circuit as will now be described.

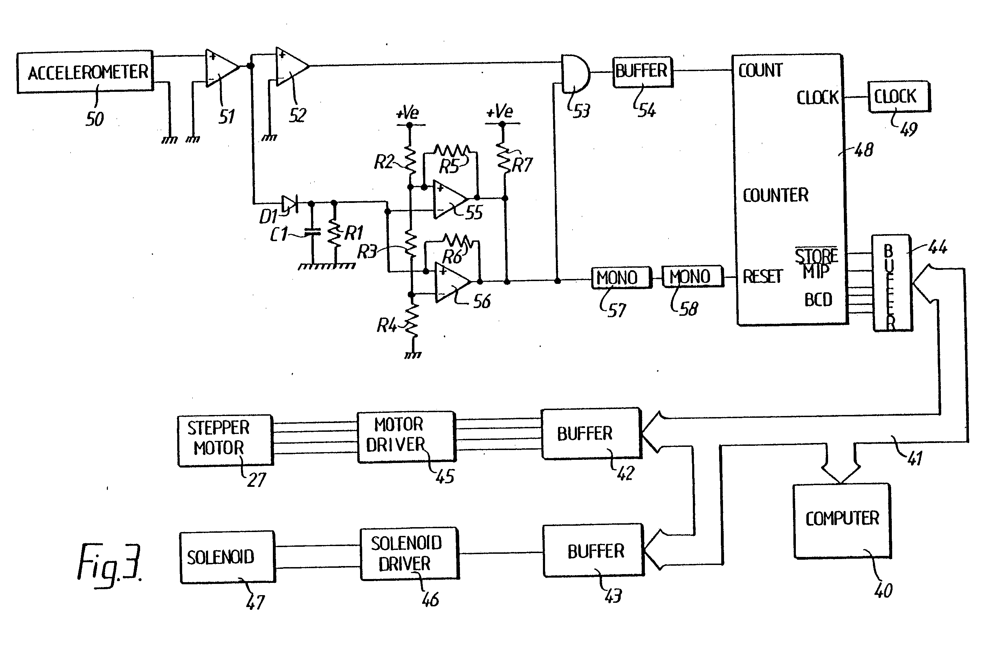

Referring now to Figure 3, the electronic circuit includes a computer 40. The computer 40 may be any suitable computer but in the present example it is an EXORset 33 system supplied by Motorola GmbH, Munchner Strasse 18, 8043 Unterfohring, Munich. The input/output ports of computer 40 are connected through a bus 41 to three buffers 42, 43 and 44. The buffer circuit 42 is connected through four rails to a motor driver circuit 45 which in the present example is a Digiplan LD2 stepper drive supplied by Unimatic Engineers Limited of Granville Road Works, Cricklewood, London, NW2. The motor driver circuit 45 is connected to the motor 27 through four further rails. The buffer 43 is connected to a solenoid driver circuit 46 which in the present example is a Darlington driver type 307—109 supplied by R. S. Components of Epworth Street, London. The solenoid driver 46 is connected through two rails to the solenoid which has been described above with reference to bar 36 and which is designated in this figure by reference numeral 47.

The buffer 44 is connected to a counter 48 which in the present example is an RS type 7226A 8 decade universal counter supplied by R. S. Components whose address has just been given. Specifically, buffer 44 is connected to counter 48 by six rails connected respectively to the $\overline{\text{STORE}}$ terminal, the $\overline{\text{MEASUREMENT IN PROGRESS}}$ ($\overline{\text{MIP}}$) terminal, and the four multiplexed BCD output terminals of counter 48. The CLOCK input of counter 48 receives clock pulses at a frequency of 10 MHz from a clock pulse generator 49. Counter 48 measures the period of vibration of the combined assembly of motor 27 and platform 35 using accelerometer 50 as will now be described.

The accelerometer 50 is a Model 215E accelerometer supplied by Endevco, Pasadena, California, U.S.A.. The output of the accelerometer 50 is connected to the input of an amplifier 51 which is a type 2365 charge amplifier manufactured by Bruel and Kjaer. The output of amplifier 51 is connected to the positive input of a comparator 52, and the comparator 52 converts the approximately sinusoidal signal of the output of amplifier 51 into a square wave. The output of amplifier 52 is connected to one input of an AND gate 53, the output of which is connected through a buffer 54 to the COUNT input of counter 48. The output of amplifier 51 is also connected to the input of an envelope detector comprising a diode $D_1$, a capacitor $C_1$ and a resistor $R_1$. The output of the envelope detector is connected to the negative input of a comparator 55 and to the positive input of a comparator 56. Three resistors $R_2$, $R_3$ and $R_4$ are connected in series between the positive supply rail and earth and function as a potential divider. The junction of resistors $R_2$ and $R_3$ is connected to the positive input of comparator 55 and the junction of resistors $R_3$ and $R_4$ is connected to the negative input of amplifier 56. In order to provide hysteresis, the outputs of amplifiers 55 and 56 are connected respectively through resistors $R_5$ and $R_6$ to their positive inputs. The outputs of both amplifiers are connected together through a pull-up resistor $R_7$ to the positive supply rail. The comparators 55 and 56 function as a window comparator and detect when the magnitude of the vibrations fall within a certain range. The outputs of comparators 55 and 56 are connected to the other input of AND gate 53 and so the square wave signal from amplifier 52 is supplied to the COUNT input of counter 48 only when the magnitude of the vibrations is within this range. The output of amplifier 56 is also connected through a pair of monostables 57 and 58 to the RESET input of counter 48.

In operation, each time motor 27 rotates the platform 35 to a desired position, solenoid 57 is momentarily energised so as to induce free vibrations. It is preferred that the solenoid 57 is energised by a square wave. After these vibrations have been induced, monostables 57 and 58 reset counter 48. When the magnitude of the vibrations fall to the upper end of the range detected by comparators 55 and 56, counter 48 measures the period of the first vibration in this range. This period is transmitted to the computer 40 where it is converted to a frequency. It is to be particularly noted that the frequency is always measured at the same amplitude of the vibrations and this is done to remove distortions caused by non-linear effects in the bar 17 and bearings. With improvements in the bar 17 and bearings, it is envisaged that it would not be necessary to measure the period at the same amplitude.

As mentioned above, by measuring the frequency at a number of positions of platform 35, the position and orientation of an object may be determined. The theory for doing this will be now described.

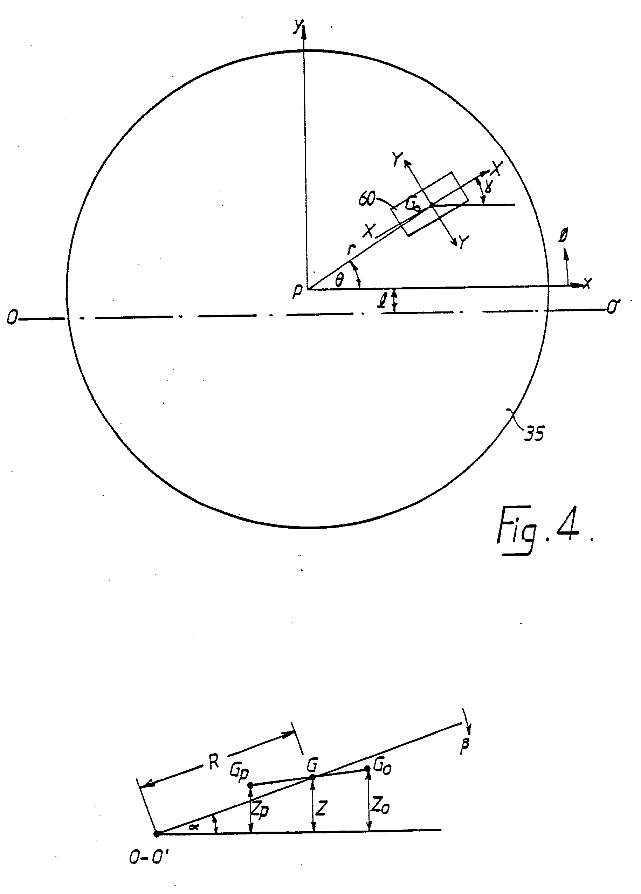

Figure 4 is a diagrammatic plan view of the apparatus and shows the platform 35 in its rest position. Rotation from the rest position is denoted by angle $\emptyset$. The platform has a centre P and orthogonal axes Px and Py. An object 60 having a centre of mass $G_o$ is positioned in the platform and its position is defined by polar co-ordinates r, $\theta$. The object has reference axes XX and YY and the axis XX is inclined to the axis Px at an angle $\gamma$. Thus, $\gamma$ defines the orientation of the object. In Figure 4, the vibratory axis 15 is denoted by O—O′ and the horizontal spacing between axes O—O′ and Px is l.

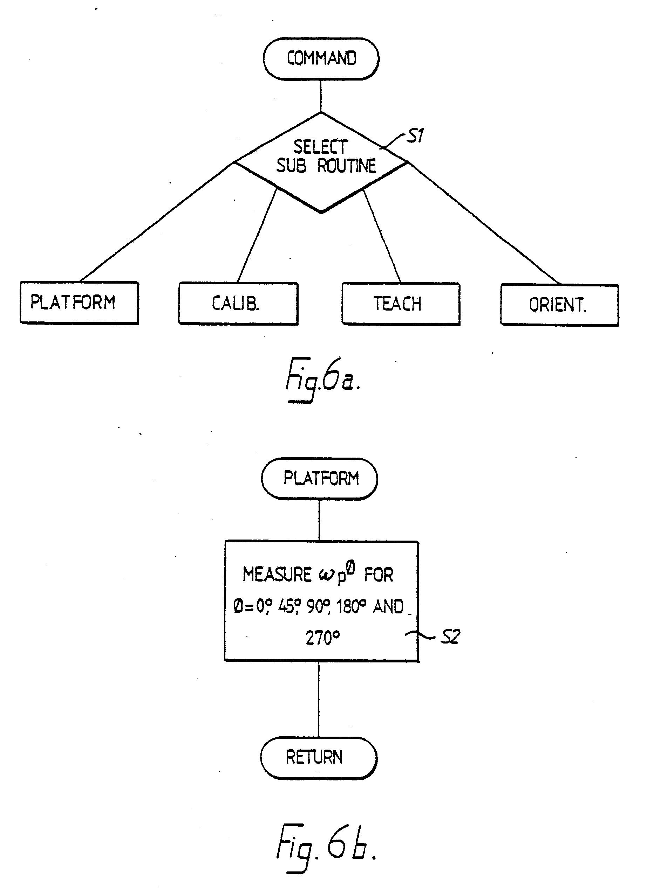

Figure 5 is a diagrammatic plan view showing the positions of the centres of mass of the platform and motor, the object, and the platform and motor together with the object and these are indicated by $G_p$, $G_o$, and G. $G_p$, $G_o$ and G are spaced vertically above the axis O—O′ by $Z_p$, $Z_o$ and $Z_G$. G is spaced a distance R from axis O—O′. Displacement of the platform about axis O—O′ is denoted by $\beta$. In the static position, a line joining the axis O—O′ to G subtends an angle $\alpha$ to the horizontal.

The basic equation for free vibration is

$$I\ddot{\beta}=-k\beta-c\dot{\beta}+mg\,R\cos(\alpha-\beta) \tag{1}$$

where I is the combined moment of inertia of the platform, motor and object about the axis O—O′, k is the torsional stiffness of torsion shaft 23, c is the damping coefficient, and m is the combined mass of the platform, motor and object.

For small vibrations

$$\cos\beta\simeq1 \tag{2}$$

and

$$\sin\beta\simeq\beta \tag{3}$$

Using equations (2) and (3) and ignoring the damping coefficient, equation (1) may be rewritten.

$$\ddot{\beta}+[(k-mgR\sin\alpha)/I]\,.\,\beta=mgR\cos\alpha/I \tag{4}$$

Therefore, the angular vibration frequency $\omega$ are given by

$$\omega^2=(k-mgZ)/I \tag{5}$$

The moment of inertia I and m are given by

$$I=I_o+I_p \tag{6}$$

and

$$m=m_o+m_p \tag{7}$$

where $I_o$ is the moment of inertia of the object about the axis O—O′, $I_p$ is the moment of inertia of the platform and motor about the axis O—O′ and $m_o$ and $m_p$ represent the mass of the object and the mass of the platform and motor. Also

$$mgZ=m_ogZ_o+m_pgZ_p \tag{8}$$

Combining equations (5) to (8) gives

$$\omega^2=(k-m_ogZ_o-m_pgZ_p)/(I_o+I_p) \tag{9}$$

From equation (9), the angular vibration frequency $\omega_p$ of the platform and motor without the object is given by

$$\omega_p{}^2=(k-m_pgZ_p)/I_p \tag{10}$$

4

Substituting equation (10) into equation (9) gives

$$\omega^2 = (I_p \, \omega_p{}^2 - m_o g Z_o)/(I_o + I_p)$$

and so

$$I_o = [I_p \, (\omega_p{}^2 - \omega^2) - m_o g Z_o]/\omega^2 \qquad (11)$$

Thus, if $I_p$, $m_o$, and $Z_o$ are known, $I_o$ may be obtained by measuring $\omega$ and $\omega_p$.

$I_o$ is also given by the following expression

$$I_o = I_G + m_o \, Z_o{}^2 + m_o \, (I + r\sin\theta)^2 \qquad (12)$$

where $I_G$ is the moment of inertia of the object about a line parallel to O—O' and passing through $G_o$.

It can be shown that

$$I_G = I_{xx} \, \cos^2\gamma + I_{yy} \, \sin^2\gamma - 2I_{xy} \, \sin\gamma\cos\gamma \qquad (13)$$

where $I_{xx}$ is the moment of inertia of the object about the axis X—X, $I_{yy}$ is the moment of inertia about the axis Y—Y, and $I_{xy}$ is the product of inertia.

By rearranging equations (13), the following is obtained

$$I_G = (I_{xx} + I_{yy})/2 + [(I_{xx} - I_{yy})/2] \cdot \cos 2\gamma - I_{xy}\sin 2\gamma \qquad (14)$$

Let

$$R = (I_{xx} + I_{yy})/2 \qquad (15)$$

$$P = (I_{xx} - I_{yy})/2 \qquad (16)$$

$$Q = I_{xy} \qquad (17)$$

Then equation (14) becomes

$$I_G = R + P \cos 2\gamma - Q \sin 2\gamma \qquad (18)$$

Combining equations (12) and (18) gives

$$I_o = R + P \cos 2\gamma - Q \sin 2\gamma + m_o Z_o{}^2 + m_o(I + r\sin \theta)^2 \qquad (19)$$

If the platform is rotated by the motor through an angle Ø, the following equation may be established

$$I_o\text{Ø} = R + P \cos 2(\gamma + \text{Ø}) - Q \sin 2(\gamma + \text{Ø}) + m_o Z_o{}^2 + m_o[I + r\sin (\theta + \text{Ø})]^2 \qquad (20)$$

where $I_o\text{Ø}$ represents the moment of inertia of the object about the axis O—O' after rotation through the angle Ø.

Combining equations (11) and (20) gives

$$[Ip\text{Ø} \, (\omega_p\text{Ø} - \omega\text{Ø})^2 - m_o g \, Z_o]/(\omega\text{Ø})^2 = R + P \cos2(\gamma + \text{Ø}) - Q \sin 2(\gamma + \text{Ø}) + m_o Z_o{}^2 + m_o[I + r\sin (\theta + \text{Ø})]^2 \qquad (21)$$

where $I_p\text{Ø}$ represents the moment of inertia of the platform and motor after rotating the platform through the angle Ø and $\omega_p\text{Ø}$ and $\omega\text{Ø}$ represent the angular vibration frequencies of the platform and motor without and with the object after this rotation.

If $I_p\text{Ø}$, $\omega_p\text{Ø}$ and $\omega\text{Ø}$ are measured for a set of values of Ø, and if $m_o$, R, P, Q and I are known, equation (21) may be used to obtain a set of simultaneous equations in r, $\theta$, $Z_o$ and $\gamma$ and these may be solved to obtain the positions and orientations of the object. The simultaneous equations may be obtained and solved for an arbitrary set of values of Ø and I may be zero or may have a finite value. However, if as shown in Figures 1 and 2 I has a finite value and 0°, 45°, 90°, 180° and 270° are chosen for Ø, this results in a particularly elegant solution for r, $\theta$ and $\gamma$ as will now be explained.

With this set of values, the following equations may be obtained

$$I_o{}^{45} = I_{45} = R + P \cos 2(\gamma + 45) - Q\sin 2(\gamma + 45) + m_o Z_o{}^2 + m_o[I + r\sin(\theta + 45)]^2 \qquad (22)$$

$$I_o{}^{90} = I_{90} = R - P \cos 2\gamma + Q\sin 2\gamma + m_o Z_o{}^2 + m_o[I + r\cos\theta]^2 \qquad (23)$$

$$I_o{}^{180} = I_{180} = R + P\cos 2\gamma - Q\sin 2\gamma + m_o Z_o{}^2 + m_o[I - r\sin\theta]^2 \qquad (24)$$

$$I_o{}^{270} = I_{270} = R - P\cos 2\gamma + Q \sin 2\gamma + m_o Z_o{}^2 + m_o \, [I - r\cos\theta]^2 \qquad (25)$$

From equation (19) and (24) and from equations (23) and (25)

$$r\sin\ \theta=(l_o-l_{180})/4m_ol \tag{26}$$

$$r\cos\ \theta=(l_{90}-l_{270})/4m_ol \tag{27}$$

Combining equations (26) and (27) gives

$$r=\sqrt{[(l_o-l_{180})^2+(l_{90}-l_{270})^2]}/4m_ol \tag{28}$$

$$\theta=\tan^{-1}[(l_o-l_{180})/(l_{90}-l_{270})] \tag{29}$$

For an object with only one stable position $Z_0$ is known and so equations (28) and (29) may be used to determine the object position by measuring $l_p\emptyset$, $\omega\emptyset$, and $\omega_p\emptyset$ for $\emptyset=0°$, 45°, 90°, 180° and 270°.

Rearranging equations (19) and (22) gives

$$l_o-R-m_oZ_0{}^2-m_o\ (l+r\sin\theta)^2=P\cos2\gamma-Q\sin2\gamma \tag{30}$$

$$l_{45}-R-moZ_0{}^2-m_o[l+r\sin(\theta+45)]^2=-P\sin\ 2\gamma-Q\ \cos2\gamma \tag{31}$$

Let

$$l_o-R-m_oZ_o{}^2-m_o(l+r\sin\theta)^2=R_o \tag{32}$$

and

$$l_{45}-R-m_oZ_o{}^2-m_o[l+r\sin(\theta+45)]^2=R_{45} \tag{33}$$

Then

$$\cos\ 2\gamma=[-R_oP+R_{45}Q]/[-(P^2+Q^2)] \tag{34}$$

and

$$\sin2\gamma=(R_{45}\ P+R_oQ)/[-(P^2+Q^2)] \tag{35}$$

Equations (34) and (35) uniquely define $\gamma$.

In the solution for r, $\theta$, $\gamma$ given above, it is assumed that the object has a single stable position. If an object has a set of stable positions, there will be a corresponding set of values for $Z_0$, $l_{xx}$, $l_{yy}$, $l_{xy}$. In order to determine the values r, $\theta$, and $\gamma$ for such an object, it is necessary to determine in which stable positions the object is lying. This may be achieved by solving equations (28), (29), (34), and (35) for each stable position in turn starting with the most stable until the correct stable position is found. Each solution may be tested by determining if the values for r, $\theta$, $\gamma$ satisfy the following equation.

$$l_o+l_{90}=2R+2m_oZ_o{}^2+m_o(l+r\sin\theta)^2+m_o(l+r\cos\theta)^2 \tag{36}$$

The computer program for controlling the apparatus is stored in a memory in the computer 40 and this program will now be described.

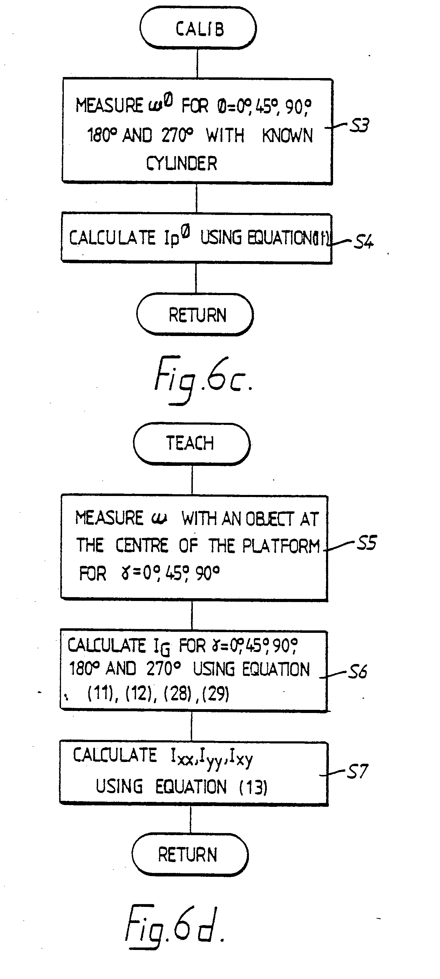

The program has a control program COMMAND and the flow chart for this is shown in Figure 6a. This routine has a step S1 in which one of four sub routines PLATFORM, CALIB, TEACH and ORIENT is selected. PLATFORM measures vibration frequencies of the platform, CALIB measures the moment of inertia of the platform in a set of rotational positions, TEACH measures the moments of inertia and the product of inertia of an object in a reference orientation which is to be discharged onto the platform during a manufacturing process, and ORIENT determines the position and orientation of the object. Thus, PLATFORM, CALIB and TEACH are used to calibrate the apparatus, and ORIENT is used to find the position and orientation of the object each time it is discharged onto the platform.

The flow chart for PLATFORM is shown in Figure 6b. In a step S2 the frequency of vibration of the platform $\omega_p\emptyset$ is measured for $\emptyset=0°$, 45°, 90°, 180° and 270°. Suitable software for rotating the platform is supplied with the motor driver circuit 45.

The flow chart for CALIB is shown in Figure 6c. In a step S3 the angular frequency of vibration $\omega\emptyset$ of the platform with a known cylinder positioned at its centre is measured for $\emptyset=0°$, 45°, 90°, 180° and 270°. In a step S4 the moment of inertia of the platform $l_p\emptyset$ is calculated for $\emptyset=0°$, 45°, 90°, 180° and 270° using the values of $\omega_p\emptyset$ and $\omega\emptyset$ found in steps S2 and S3, the known inertia properties of the cylinder and equation (11).

The flow chart for TEACH is shown in Figure 6c, and in this sub-routine it is assumed that the mass $m_o$ of the object has been obtained by weighing it, that the object has only one stable position, and that the height of centre of mass from the axis O—O′ can be and has been measured. In a step S5, the frequency $\omega$ is measured with the object on the platform for orientations $\gamma=0°$, 45°, 90°, 180°, and 270°. In a step S6 the moment of inertia $l_G$ is calculated for each orientation using equations (11) (12) (27), (28) and in a step S7 $l_{xx}$, $l_{yy}$, $l_{xy}$ are calculated using equation (13).

If the object has more than one stable position, TEACH is modified to calculate $l_{xx}$, $l_{yy}$, $l_{xy}$ for each stable position.

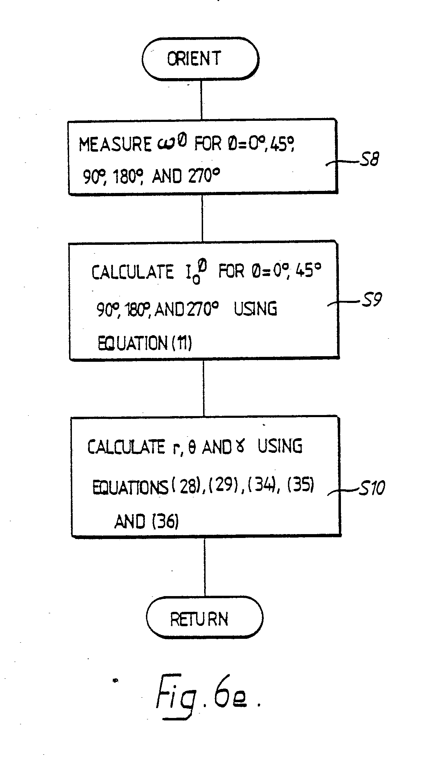

The flow chart for ORIENT is shown in Figure 6e. In a step S8, $\omega\emptyset$ is measured for 0°, 45°, 90°, 180°, 270°, in a step S9 $l_o\emptyset$ is calculated for these values of $\emptyset$ using the already known values and equation (11), and in a step S10 r, $\theta$ and $\gamma$ are calculated using equations (28), (29), (34), (35) and (36).

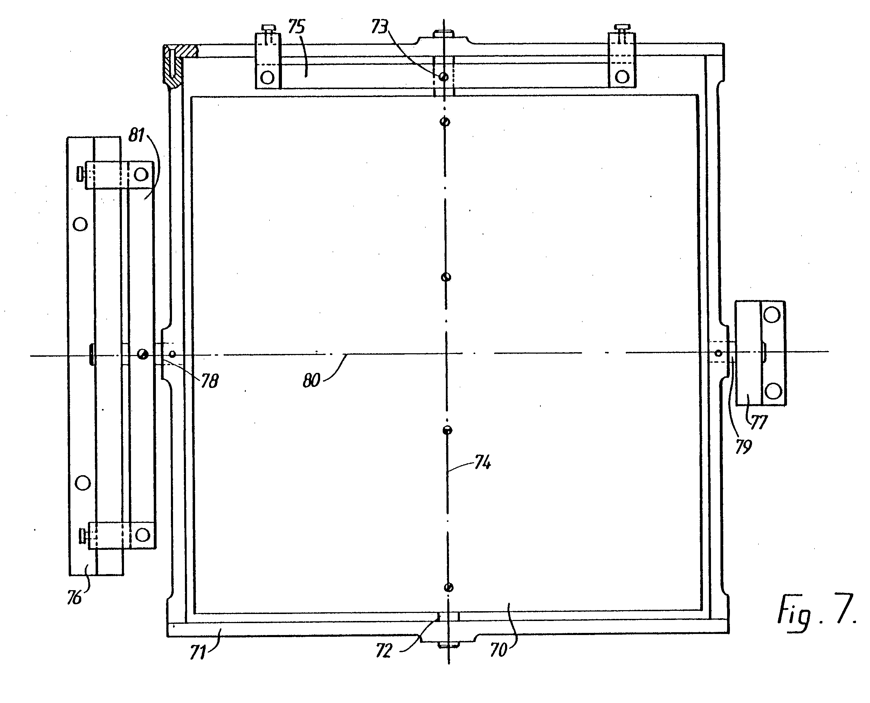

Referring now to Figure 7, the apparatus shown there comprises a platform 70 which is mounted on a frame 71 by a pair of shafts 72 and 73 which are located in bearings in the frame 71 for rotation about an axis 74. The platform 70 is constrained against rotation by leaf spring 75. The frame 71 is mounted on a pair of pillars 76 and 77 by a pair of shafts 78 and 79 which are mounted in bearings in the pillars 76 and 77 for rotation about a horizontal axis 80. With no object placed on it, the platform 70 is horizontal in its static state. The pillars 76 and 77 are secured to a base member, not shown. The frame 71 is restrained against rotation by a leaf spring 81 which is secured to the pillar 76 and to shaft 78.

The shaft 79 is provided with a displacement transducer to measure the rotational displacement of the frame 71 with respect to the base and with a velocity transducer to measure the velocity of rotation. Similarly, the shaft 73 is provided with a displacement transducer to measure the rotational displacement of the platform 70 with respect to the frame 71 and with a velocity transducer to measure the velocity of rotation. These transducers are connected to a computer and, when an object is discharged onto the platform 70 into an unknown position, the computer calculates the position of its centre of mass from the static displacements detected by the two displacement transducers. The orientation of the object is detected by giving the platform 70 an initial displacement and then making a set of displacement and velocity measurements. These measurements can be used to form a set of simultaneous equations which can be solved to determine the orientation of the object.

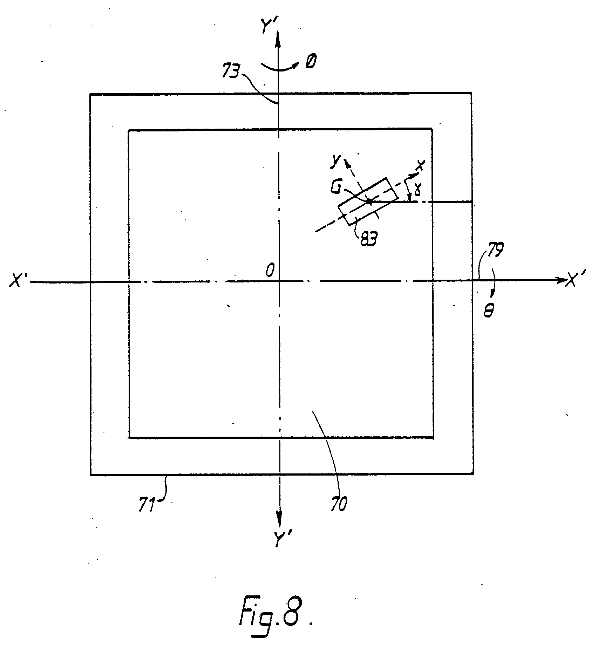

The theoretical considerations which are used to determine the position and orientation of an object discharged onto the platform 70 will now be described with reference to Figure 8. The theory will be described initially for an object which has only one stable position and for which the mass, inertia matrix and position of centre of mass are known. Also for simplicity the platform is assumed to be square and of uniform thickness.

In Figure 8, the platform 70 and frame 71 are shown diagrammatically. The centre of mass of the platform is indicated at O and the platform is associated with an absolute set of orthogonal axes OX'Y'Z'. The axis OZ' is not shown but extends from the plane of the drawing. The platform is also associated with a set of orthogonal axes OXYZ, not shown, which are fixed to the platforms and which are identical to the axes OX'Y'Z' at zero displacement. Rotation of frame 71 relative to the base is denoted by angle $\theta$ and rotation of the platform relative to the frame is denoted by angle $\emptyset$.

Figure 8 shows an object 83 positioned on platform 70 and its centre of mass is shown at G. The object has orthogonal reference axes Gx, Gy and Gz. The axis Gz is not shown but extends out of the plane of the paper. The axes Gx and Gy are orientated at an angle $\gamma$ to the axes OX and OY.

For a rotation $\theta$, $\emptyset$ it can be shown that the transformation matrix for rotation $[R_{OXYZ}]_{OX'Y'Z'}$ is given by

$$[R_{OXYZ}]_{OX'Y'Z'} = \begin{bmatrix} \cos\emptyset & 0 & \sin\emptyset \\ \sin\theta\sin\emptyset & \cos\theta & -\sin\theta\cos\emptyset \\ -\cos\theta\sin\emptyset & \sin\theta & \cos\theta\cos\emptyset \end{bmatrix} \tag{37}$$

Also

$$\overline{t_p}' = [R_{OXYZ}]_{OX'Y'Z'} \cdot \overline{t_p} \tag{38}$$

where $\overline{t_p}'$ and $\overline{t_p}$ are the position vectors of any point P with respect to the axes OX'Y'Z' and OXYZ.

Let us represent the position of the centre of mass (G) by $\overline{t_G}$ with respect to OXYZ such that

$$\overline{t_G} = \begin{pmatrix} X_G \\ Y_G \\ Z_G \end{pmatrix} \tag{39}$$

If the shaft rotations are $\theta_s$ and $\emptyset_s$ at the static equilibrium position, then the centre of mass with respect to $O_{X'Y'Z'}$ is given by

$$\overline{t_G}'_s = \begin{pmatrix} X'_{Gs} \\ Y'_{Gs} \\ Z'_{Gs} \end{pmatrix} = [R_{OXYZ}]_{OX'Y'Z'} \cdot \overline{t_G} \tag{40}$$

Therefore

$$X'_{Gs} = X_G \cos\emptyset s + Z_G \sin\emptyset_s \tag{41}$$

$$Y'_{Gs} = X_G \sin\theta_s \sin\emptyset_s + Y_G \cos\theta_s - Z_G \sin\theta_s \cos\emptyset_s \tag{42}$$

$$Z'_{Gs} = -X_G \cos\theta_s \sin\emptyset_s + Y_G \sin\theta_s + Z_G \cos\theta_s \cos\emptyset_s \tag{43}$$

Taking moments about the OX' and OY' axes gives

$$-mgY'_{Gs} - k_a \theta_s = 0 \tag{44}$$

and

$$mgX'_{Gs} - k_b\emptyset_s\cos \theta_s = 0 \tag{45}$$

where m is the mass of the object and $k_a$ and $k_b$ are stiffnesses of springs 81 and 75.

From equation (41), (42), (44) and (45) it follows

$$X_G = [(k_b\emptyset_s \cos \theta_s/mg) - Z_G \sin\emptyset_s]/\cos\emptyset_s \qquad (46)$$

and

$$Y_G = -[(k_a\theta_s/mg) + X_G\sin\theta_s\sin\emptyset_s - Z_G \sin\theta_s\cos\emptyset_s]/\cos\theta_s \qquad (47)$$

Thus, the position of the centre of mass can be obtained from equation (46) and (47).

As will be explained by deriving expressions for the kinetic, gravitational and strain energy of the system at several instants of time and by using the principle of conservation of energy, a set of simultaneous equations may be established and solved to obtain the inertia matrix of the object referred to GXYZ. From the inertia matrix the orientation $\gamma$ may be obtained.

Since the platform is square and uniform, its centre (O,O,O) is also its centre of mass and so the combined centre of mass $\overline{t_c}$ of the platform and object is given by

$$\overline{t_c} = m \cdot \overline{t_G}/(m+m_p) \qquad (48)$$

where $m_p$ is the mass of the platform.

The angular velocities of the platform $\overline{\Omega p'}$ and $\overline{\Omega p}$ referred respectively to OX'Y'Z' at OXYZ are given by

$$\overline{\Omega p'} = \begin{pmatrix} \dot{\theta} \\ \dot{\emptyset} \cos \theta \\ \dot{\emptyset} \sin \theta \end{pmatrix} \qquad (49)$$

and

$$\overline{\Omega p} \ [R_{OXYZ}]T_{OX'Y'Z'} \ \overline{\Omega p'} \qquad (50)$$

The velocity of the centre of mass $\overline{V_c'}$ is given by

$$\overline{V_c'} = \overline{\Omega_p'} \times \overline{t_c'} \qquad (51)$$

The kinetic energy of translation $KE_T$ of the platform and object is given by

$$KE_T = (m+m_p)\overline{V_c'}T \cdot \overline{V_c'}/2 \qquad (52)$$

The kinetic energy of rotation $KE_R$ is given by

$$KE_R = \overline{\Omega p}T \cdot I_{CXYZ} \cdot \overline{\Omega p}/2 \qquad (53)$$

where $I_{CXYZ}$ is the inertia matrix of the platform and object with respect to axes passing through the combined centre of mass parallel to OXYZ.

The kinetic energy of translation of the frame is zero and its kinetic energy of rotation $KE_F$ is given by

$$KE_F = I_F \ \dot{\theta}2/2 \qquad (54)$$

where $I_F$ is its moment of inertia about OX'.

The gravitational energy GPE of the platform and object taking the centre of OX'Y'Z' as the datum point is

$$GPE = (m+m_p)gZ_c' \qquad (55)$$

The strain energy of the two springs SE is given by

$$SE = (k_a\theta2/2) + (k_b\emptyset2/2) \qquad (56)$$

From the principle of conservation of energy and ignoring the friction forces.

$$KE_T + KE_R + KE_F + GPE + SE = \text{constant} \qquad (57)$$

There are six unknowns in the inertia matrix $I_{CXYZ}$ and total energy represents a seventh unknown. Therefore, by measuring $\theta$, $\emptyset$, $\dot{\theta}$, $\dot{\emptyset}$ in several positions, equation (57) may be used to produce a set of simultaneous equations which may be solved to give the elements of the inertia matrix. The inertia matrix of the object $I_{GXYZ}$ with respect to GXYZ may be obtained from the following equations.

$$I_{CXYZ} = I_{GXYZ} + m(\overline{t_G} - \overline{t_c})(\overline{t_G} - \overline{t_c})T + I_{PXYZ} + m_p\overline{t_c}\overline{t_c}T \qquad (58)$$

where $I_{PXYZ}$ is the inertia matrix of the platform with respect to OXYZ.

The inertia matrix of the object $I_{Gxyz}$ with respect to Gxyz is related to $I_{GXYZ}$ by the following equations

$$I_{GXYZ}=[R_{Gxyz}]_{GXYZ} \cdot I_{Gxyz} \cdot [R_{Gxyz}]T_{GXYZ} \qquad (59)$$

$$[R_{Gxyx}]GXYZ=\begin{bmatrix} \cos\gamma & -\sin\gamma & 0 \\ \sin\gamma & \cos\gamma & 0 \\ 0 & 0 & 1 \end{bmatrix} \qquad (60)$$

$\gamma$ may be obtained from equations (58), (59) and (60).

If the inertia matrix $I_{Gxyz}$ is not known, this may be obtained by placing the object on the platform with $\gamma=0$ and then obtaining $I_{Gxyz}$ from equation (57).

If an object has more than one stable position, the actual stable position can be found as follows. $I_{Gxyz}$ and $Z_G$ are selected for a trial stable position and $I_{GXYZ}$ is found using equation (57) using the selected value for $Z_G \cdot I_{GXYZ}$ is given by

$$I_{GXYZ}=\begin{bmatrix} I_{GXX} & I_{GXY} & I_{GXZ} \\ I_{GXY} & I_{GYY} & I_{GYZ} \\ I_{GXZ} & I_{GYZ} & I_{GZZ} \end{bmatrix} \qquad (61)$$

The quantity $(I_{GXX}+I_{GYY})$ is a constant and independent of $\gamma$.

Therefore, if the equality

$$I_{GXX}+I_{GYY}=I_{Gxx}+I_{Gyy} \qquad (62)$$

holds, the position is correct. If the equality does not hold successive trial stable positions are selected until the correct one is found.

A further embodiment of this invention, not shown, comprises a square platform and a set of lightweight square frames mounted one inside the other with the platform mounted inside the inner frame. More specifically, the platform is connected to the inner frame by a mounting structure which comprises a shaft attached to the platform and mounted in a bearing in the inner frame and a torsion bar which is attached to both the platform and the frame. The shaft and torsion bar are aligned so that the platform can vibrate relative to the inner frame about an axis lying in the plane of the frame. A similar mounting structure is provided between each pair of frames and between the outer frame and a base member.

Each mounting structure is provided with a clamp and, by releasing each clamp in turn, the platform can be vibrated about a set of axes. The mounting structures are arranged so that, relative to the platform, these axes occupy positions which are analogous to the relative position of axis 15 to platform 35 in each rotational position of platform 35 in the example discussed with reference to Figures 1 to 6E. Thus, by measuring the frequency of vibration about each axis, the position and orientation of an object on the platform may be calculated.

In a modification of the example shown in Figures 1 to 6E, the bearings 18 and 20 and the end 21 of torsion bar 17 are mounted on circular rails secured to the base 10 and a clamp is provided for platform 35. In this arrangement, each time motor 27 rotates, the platform 35 is held stationary and so axis 15 rotates. The platform 35 is then released and bearings 18 to 20 and end 21 are clamped to their rails and vibrations are then induced.

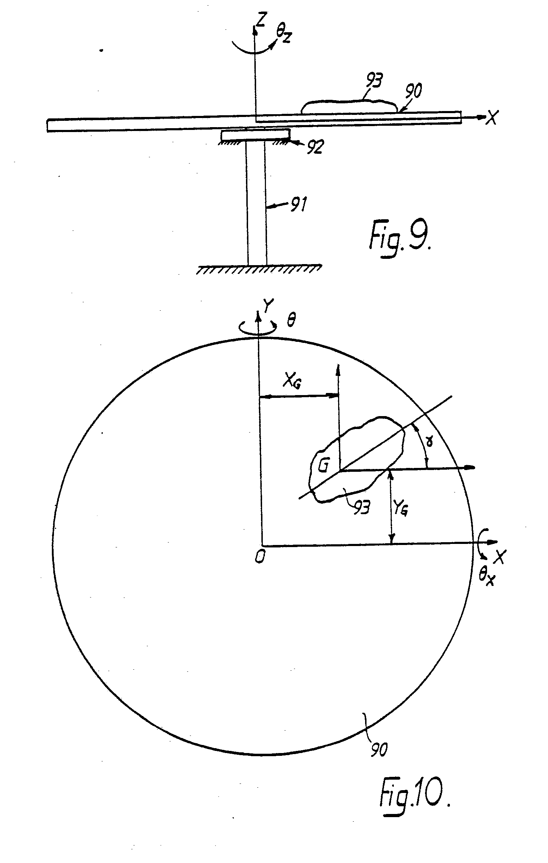

In Figure 9 and 10, the apparatus comprises a circular platform 90 secured to the top of a vertical column 91 and constrained by a self-aligning ball bearing 92 so that displacement along X and Y axes is prevented and only rotations about X, Y, Z are possible. Thus, the platform 90 has three degrees of freedom. Both the bottom of the pillar 91 and the ball bearing 92 are mounted on the base of the apparatus.

The theoretical considerations for finding the position and orientation of an object 93 discharged onto the platform 90 will be discussed with reference to Figure 10. Figure 10 shows a diagrammatic plan view of the platform 90. Platform 90 has a centre of mass O and is associated with orthogonal axes OXYZ. The object 93 has a mass m and is assumed to occupy a position $X_G$, $Y_G$ at an orientation $\gamma$.

The static equilibrium position of platform 90 is determined by the position of object 93. If the stiffness of the support between platform 90 and column 91 is represented by a stiffness matrix [K] and the static deflections of the platform 90 about OX and OY are $\theta_x$ and $\theta_y$, then

$$[K] \begin{bmatrix} \theta_x \\ \theta_y \\ 0 \end{bmatrix} = \begin{bmatrix} -mg \ Y_G \\ -mg \ X_G \\ 0 \end{bmatrix} \qquad (63)$$

Therefore, if $\theta_x$ and $\theta_y$ are measured, $X_G$ and $Y_G$ may be obtained.

The equation for free vibration of platform 90 may be written

$$-\omega_i^2[I]\bar{a}+[K]\bar{a}=0 \qquad (64)$$

where $\omega_i$ is one of the three natural frequencies of vibration $\omega_1$, $\omega_2$, $\omega_3$. I is the total inertia matrix for the

object and platform, $\bar{a}=(\theta_x, \theta_y, \theta_z)T$ and $\theta_z$ is the rotation of the platform about OZ. Therefore, the natural frequencies of vibration satisfy the following relationships:

diagonal $$([K]^{-1}[I])=(1/\omega_1^2+1/\omega_2^2+1/\omega_3^2) \qquad (65)$$

determinant $$([K]^{-1}[I])=1/(\omega_1^2 \cdot \omega_2^2 \cdot \omega_3^2) \qquad (66)$$

determinant $$([K]-\omega_i^2[I])=0 \text{ for } i=1, 2, 3 \qquad (67)$$

However, if the inertia matrices of the platform and the object in a reference position are known, and the position of the object is obtained as shown above, all the elements of [I] can be written in terms of the orientation ($\gamma$) of the object. Therefore, one or more of equations 64 to 66 may be used to determine $\gamma$ from the natural frequencies. These frequencies may be obtained by analysing the displacement waveform of any point on the platform 90 when it is under free vibration.

In a modification of the apparatus shown in Figures 9 and 10, the ball bearing 92 is replaced by a system of linkage elements which serve to constrain the platform to rotations about the X, Y, Z axes.

In a further modification, the ball bearing 92 is omitted thereby permitting displacement of the platform 90 along the X and Y axes in addition to rotation about the X, Y and Z axes. In this case, the platform 90 has 5 degrees of freedom and the position and orientation are found using the appropriate equations.

## Claims

1. An apparatus for locating an object positioned on a platform (35, 70, 90) characterised in that the apparatus includes the platform (35, 70, 90), said platform (35, 70, 90) being mounted for vibration about at least one axis and arranged to receive the object, means (50, 37) for measuring at least one parameter related to the vibration of the platform whilst the platform is vibrating, first calculating means (38) responsive to the measuring means (50, 37) for calculating at least one quantity related to the inertia of the object positioned on the platform (35, 70, 90), and a second calculating means (39) for calculating the orientation of the object on the platform (35, 70, 90) from said at least one inertia quantity.

2. An apparatus as claimed in claim 1 characterised in that the apparatus further includes a rotary motor (27) arranged to rotate the platform (35) relative to the motor (27) about a rotary axis (30), the combined assembly of the motor (27) and platform (35) being mounted for vibration about a single vibratory axis (15) which is perpendicular to the rotary axis (30) of the motor.

3. An apparatus as claimed in claim 2 characterised in that the measuring means (50, 37) is arranged to calculate the frequency of vibration of the combined assembly at a set of rotational positions of the platform (35), the first calculating means (38) is arranged to calculate an inertia quantity at each of said positions, and the second calculating means (39) is arranged to calculate the position and orientation of the object from said inertia quantities.

4. An apparatus as claimed in Claim 2 or Claim 3 characterised in that the rotary axis (30) of the motor and the vibratory axis (15) are arranged so that they do not intersect each other.

5. An apparatus as claimed in Claim 1 characterised in that the apparatus includes a frame (71) mounted on a base (76, 77) for vibration about a first vibratory axis (80) and the platform (70) is mounted on the frame (71) for vibration about a second vibratory axis (74), the first and second vibratory axes being perpendicular to each other.

6. An apparatus as claimed in Claim 5 characterised in that the measuring means is arranged to measure angular displacement and velocity of the frame (71) about the first vibratory axis (80) and angular displacement and velocity of the platform (70) about the second vibratory axis (74), the first calculating means is arranged to calculate the position of an object on the platform from the static angular displacements and the inertia matrix of the object with respect to a fixed set of axes from a set of displacement and velocity measurements made during vibration of the platform (70), and the second calculating means is arranged to calculate the orientation of the object from the inertia matrix.

7. An apparatus as claimed in Claim 1 characterised in that the platform is mounted to vibrate in turn about each one of a set of axes.

8. An apparatus as claimed in Claim 1 characterized in that the platform (90) is mounted on a base member (91) so that it is constrained to rotate about three separate axes.

9. An apparatus as claimed in claim 2 characterized in that, during operation of the motor (27), the platform (35) remains stationary and the motor (27) and the single vibratory axis (15) rotate.

10. An apparatus as claimed in claim 1 characterized in that the platform is secured to the top of the pillar.

11. A method of locating an object positioned on a platform characterised in that the method comprises the steps of: permitting the platform to vibrate about at least one vibratory axis, measuring at least one parameter related to the vibration of the platform, calculating at least one quantity related to the inertia of the object on the platform from the measurement of said at least one parameter, and calculating at least the orientation of the object from said at least one inertia quantity.

**Patentansprüche**

1. Vorrichtung zur Ortsbestimmung eines auf einer Plattform (35, 70, 90) befindlichen Objekts, dadurch gekennzeichnet, daß die Vorrichtung aufweist die Plattform (35, 70, 90), die um wenigstens eine Achse vibrierbar und zur Aufnahme des Objekts angeordnet ist, Einheiten (37, 50) zur Messung wenigstens eines auf die Schwingung der Plattform bezogenen Parameters, während die Plattform schwingt, eine erste Recheneinheit (38), die auf die Meßeinheiten (50, 37) anspricht und wengistens eine Größe errechnet, die auf die Trägheit des auf der Plattform (35, 70, 90) angeordneten Objekts bezogen ist, und eine zweite Recheneinheit (39), die aus der wenigstens einen Trägheitsgröße die Orientierung des Objekts auf der Plattform (35, 70, 90) errechnet.

2. Vorrichtung nach Anspruch 1, dadurch gekennzeichnet, daß sie ferner einen Motor (27) aufweist, der die Plattform (35) relativ zum Motor (27) um eine Drehachse (30) dreht, wobei die aus Motor (28) und Plattform (35) bestehende kombinierte Baugruppe so angeordnet ist, daß sie um eine einzige Vibrationsachse (15) vibrierbar ist, die zur Drehachse (30) des Motors senkrecht verläuft.

3. Vorrichtung nach Anspruch 2, dadurch gekennzeichnet, daß die Meßeinheiten (50, 37) die Schwingungsfrequenz der kombinierten Baugruppe an einer Gruppe von Drehstellungen der Plattform (35) errechnen, daß die erste Recheneinheit (38) eine Trägheitsgröße an jeder dieser Stellungen errechnet, und daß die zweite Recheneinheit (39) aus den Trägheitsgrößen die Position und Orientierung des Objekts errechnet.

4. Vorrichtung nach Anspruch 2 oder 3, dadurch gekennzeichnet, daß die Drehachse (30) des Motors und die Vibrationsachse (15) so angeordnet sind, daß sie einander nicht schneiden.

5. Vorrichtung nach Anspruch 1, dadurch gekennzeichnet, daß sie einen auf einer Basis (76, 77) angeordneten Rahmen (71) aufweist, der um eine erste Vibrationsachse (80) vibrierbar ist, und daß die Plattform (70) an dem Rahmen (71) um eine zweite Vibrationsachse (74) vibrierbar angeordnet ist, wobei die beiden Vibrationsachsen zueinander senkrecht stehen.

6. Vorrichtung nach Anspruch 5, dadurch gekennzeichnet, daß die Meßeinheiten die Winkelverschiebung und -geschwindigkeit des Rahmens (71) um die erste Vibrationsachse (80) sowie die Winkelverschiebung und -geschwindigkeit der Plattform (70) um die zweite Vibrationsachse (74) erfassen, daß die erste Recheneinheit die Position eines auf der Plattform befindlichen Objekts aus den statischen Winkelverschiebungen und der Trägheitsmatrix des Objekts in bezug auf eine fest vorgegebene Gruppe von Achsen aus einem Satz von Verschiebungs- und Geschwindigkeitsmessungen, die während der Vibration der Plattform (70) durchgeführt wurden, errechnet und die zweite Recheneinheit aus der Trägheitsmatrix die Orientierung des Objekts errechnet.

7. Vorrichtung nach Anspruch 1, dadurch gekennzeichnet, daß die Plattform so angeordnet ist, daß sie abwechselnd um je eine Gruppe von Achsen vibriert.

8. Vorrichtung nach Anspruch 1, dadurch gekennzeichnet, daß die Plattform (90) auf einer Basis (91) angeordnet ist, so daß sie zwangsläufig um drei gesonderte Achsen drehbar ist.

9. Vorrichtung nach Anspruch 2, dadurch gekennzeichnet, daß bei laufendem Motor (27) die Plattform (35) ortsfest bleibt und der Motor (27) und die einzige Vibrationsachse (15) umlaufen.

10. Vorrichtung nach Anspruch 1, dadurch gekennzeichnet, daß die Plattform auf dem Oberende eines Ständers montiert ist.

11. Verfahren zur Ortsbestimmung eines auf einer Plattform angeordneten Objekts, gekennzeichnet durch die folgenden Schritte: Schwingen der Plattform um wenigstens eine Vibrationsachse, Messen wenigstens eines auf die Vibration der Plattform bezogenen Parameters, Errechnen wenigstens einer auf die Trägheit des Objekts auf der Plattform bezogenen Größe aus der Messung des wenigstens einen Parameters und Errechnen wenigstens der Orientierung des Objekts aus der wenigstens einen Trägheitsgröße.

**Revendications**

1. Appareil pour localiser un objet placé sur un plateau (35, 70, 90), caractérisé en ce que le plateau (35, 70, 90) fait partie de l'appareil, le plateau étant monté pour pouvoir vibrer autour d'au moins un axe et étant agencé pour recevoir l'objet, l'appareil comprenant en outre un dispositif (50, 37) pour mesurer au moins un paramètre relatif à la vibration du plateau pendant que celui-ci vibre, un premier dispositif calculateur (38) réagissant au dispositif de mesure (50, 37) pour calculer au moins une quantité relative à l'inertie de l'objet placé sur le plateau (35, 70, 90) et un second dispositif calculateur (39) pour calculer l'orientation de l'objet sur le plateau (35, 70, 90) à partir de cette quantité inertielle.

2. Appareil selon la revendication 1, caractérisé en ce qu'il comprend en outre un moteur rotatif (27) monté pour tourner le plateau (35) par rapport à lui-même autour d'un axe de rotation (30), l'ensemble constitué du moteur (27) et du plateau (35) étant monté pour pouvoir vibrer autour d'un axe de vibration unique (15) qui est perpendiculaire à l'axe de rotation (30) du moteur.

3. Appareil selon la revendication 2, caractérisé en ce que le dispositif de mesure (50, 37) est agencé pour calculer la fréquence de vibration dudit ensemble à une série de positions angulaires du plateau (35), le premier dispositif calculateur (38) est agencé pour calculer une quantité inertielle à chacune desdites

**0 157 845**

positions, et le second dispositif calculateur (39) est agencé pour calculer la position et l'orientation de l'objet d'après les quantités inertielles.

4. Appareil selon la revendication 2 ou 3, caractérisé en ce que l'axe de rotation (30) du moteur et l'axe de vibration (15) sont disposés de manière qu'ils ne se coupent pas.

5. Appareil selon la revendication 1, caractérisé en ce qu'il comprend un cadre (71) monté sur un suport (76, 77) pour pouvoir vibrer autour d'un premier axe de vibration (80) et le plateau (70) est monté sur le cadre (71) pour pouvoir vibrer autour d'un second axe de vibration (74), le premier et le second axe de vibration étant perpendiculaires entre eux.

6. Appareil selon la revendication 5, caractérisé en ce que le dispositif de mesure est agencé pour mesurer le déplacement et la vitesse angulaires du cadre (71) autour du premier axe de vibration (80) et le déplacement et la vitesse angulaires du plateau (72) autour du second axe de vibration (74), le premier dispositif calculateur est agencé pour calculer la position d'un objet sur le plateau d'après les déplacements angulaires statiques et la matrice de quantités inertielles de l'objet par rapport à une série fixe d'axes, à partir d'une série de mesures de déplacement et de vitesse effectuées pendant la vibration du plateau (70), et le second dispositif calculateur est agencé pour calculer l'orientation de l'objet à partir de la matrice de quantités inertielles.

7. Appareil selon la revendication 1, caractérisé en ce que le plateau est monté pour pouvoir vibrer successivement autour de chacun des axes d'une série d'axes.

8. Appareil selon la revendication 1, caractérisé en ce que le plateau (90) est monté sur un élément de support (91) de manière qu'il soit obligé de tourner autour de trois axes séparés.

9. Appareil selon la revendication 2, caractérisé en ce que, pendant le fonctionnement du moteur (27), le plateau (35) reste stationnaire, tandis que le moteur (27) et l'unique axe de vibration (15) tournent.

10. Appareil selon la revendication 1, caractérisé en ce que le plateau est fixé au sommet d'un pilier.

11. Procédé pour localiser un objet placé sur un plateau, caractérisé en ce qu'il comprend les opérations qui consistent à: permettre au plateau de vibrer autour d'au moins un axe de vibration, mesurer au moins un paramètre relatif à la vibration du plateau, calculer au moins une quantité relative à l'inertie de l'objet sur le plateau, d'après la mesure dudit paramètre, et calculer au moins l'orientation de l'objet à partir de ladite quantité inertielle.

**Fig.1.**

| FREQUENCY MEASUREMENT | INERTIA CALCULATION | ORIENTATION CALCULATION |

37  38  39

**Fig.2.**

Fig.3.

0 157 845

Fig.4.

Fig.6a.

Fig. 6b.

CALIB

MEASURE $\omega^{\emptyset}$ FOR $\emptyset=0°, 45°, 90°,$ 180° AND 270° WITH KNOWN CYLINDER — S3

CALCULATE $I_p^{\emptyset}$ USING EQUATION(11) — S4

RETURN

$$\textit{Fig.6c.}$$

TEACH

MEASURE $\omega$ WITH AN OBJECT AT THE CENTRE OF THE PLATFORM FOR $\gamma=0°, 45°, 90°$ — S5

CALCULATE $I_G$ FOR $\gamma=0°, 45°, 90°,$ 180° AND 270° USING EQUATION (11), (12), (28), (29) — S6

CALCULATE $I_{xx}, I_{yy}, I_{xy}$ USING EQUATION (13) — S7

RETURN

$$\textit{Fig.6d.}$$

ORIENT

MEASURE $\omega^{\emptyset}$ FOR $\emptyset=0°, 45°,$ 90°, 180°, AND 270° — S8

CALCULATE $I_0^{\emptyset}$ FOR $\emptyset=0°, 45°$ 90°, 180°, AND 270° USING EQUATION (11) — S9

CALCULATE $r, \theta$ AND $\gamma$ USING EQUATIONS (28), (29), (34), (35) AND (36) — S10

RETURN

*Fig. 6e.*

Fig. 7.

0 157 845

Fig.8.

Fig.9.

Fig.10.